# EUROPEAN PATENT APPLICATION

(11) **EP 1 202 244 A1**
(43) Date of publication of application: **02.05.2002**
(21) Application number: 01912173.0
(22) Date of filing: 08.03.2001
(51) Int. Cl.: G09G 3/34, G09G 3/36, G02F 1/133

(54) **IMAGE DISPLAY AND IMAGE DISPLAYING METHOD**

(30) Priority: 14.03.2000 JP 2000069588
(71) Applicant: MITSUBISHI DENKI KABUSHIKI KAISHA, Tokyo 100-8310 (JP)
(72) Inventor: NAGAI, Haruhiko, Mitsubishi Denki Kabushiki Kaisha, Tokyo 100-8310 (JP); KAMIZAWA, Sadaomi, Mitsubishi Denki Kabushiki K., Tokyo 100-8310 (JP); NISHINO, Ko, Mitsubishi Denki Kabushiki Kaisha, Tokyo 100-8310 (JP); URAKABE, Takahiro, Mitsubishi Denki Kabushiki K., Tokyo 100-8310 (JP); IWATA, Akihiko, Mitsubishi Denki Kabushiki Kaisha, Tokyo 100-8310 (JP)
(74) Representative: Popp, Eugen, Dr.
(86) International application number: JP0101797
(87) International publication number: WO0169584

(57) **Abstract**

It is aimed to perform a gradation display by using a light source array. A pixel having a desired luminance Y can be displayed by changing an emission intensity P of LED light source during one pixel display period C and turning on and off LCD corresponding to the change of the emission intensity P of LED light source.

## Description

### Technical Field

This invention relates to an image display apparatus in which the gradation display is performed by using a light source array arranged like a matrix.

### Background Art

As shown in Unexamined Japanese Patent Publication HEI No. 6―265847, there is an art of displaying gradation by turning on or off an LCD (liquid crystal display). However, it is not detailed how to perform the gradation display by using image signals.

The image display apparatus in which laser diodes (LD) arranged two-dimensionally are used as a light source is disclosed in International Publication WO99/49358. However, it is not detailed how to display gradation by using this light source array.

It is one of objects of the present invention to provide an image display apparatus in which the gradation can be displayed by utilizing a light source of digital system.

It is another object of the present invention to provide an image display apparatus in which the gradation can be displayed by using a light source array arranged two-dimensionally.

### Disclosure of the Invention

According to one aspect of the present invention, an image display apparatus which displays an image based on an image signal comprises:
a light source;
a light source driving circuit for inputting the image signal and controlling an emission of the light source;
an optical device in which optical switches, for inputting a beam output from the light source and modulating the beam, are arranged; and
an optical device driving circuit for inputting the image signal and controlling an operation time of each of the optical switches in the optical device,
wherein the emission of the light source and the operation time of each of the optical switches in the optical device are combined to perform a gradation display at each pixel.

The above optical device driving circuit changes the operation time of each of the optical switches during one pixel display period based on an input image signal, and
the above light source driving circuit sets an emission time period of the light source to be the one pixel display period and sets an emission intensity of the light source to be fixed during the one pixel display period.

The above optical device driving circuit sets the operation time of each of the optical switches to be one pixel display period, and
the above light source driving circuit sets an emission intensity of the light source to be fixed during the one pixel display period and changes an emission time period of the light source during the one pixel display period based on an input image signal.

The above optical device driving circuit changes the operation time of each of the optical switches during one pixel display period based on an input image signal, and
the above light source driving circuit sets an emission time period of the light source to be the one pixel display period and changes an emission intensity of the light source during the one pixel display period based on the input image signal.

The above optical device driving circuit sets the operation time of each of the optical switches to be one pixel display period, and
the above light source driving circuit changes an emission time period of the light source during the one pixel display period based on an input image signal and changes an emission intensity of the light source during the one pixel display period based on the input image signal.

The above optical device driving circuit changes the operation time of each of the optical switches during one pixel display period based on an input image signal, and
the above light source driving circuit sets an emission intensity of the light source to be fixed during the one pixel display period and changes an emission time period of the light source during the one pixel display period based on the input image signal.

The above optical device driving circuit changes the operation time of each of the optical switches during one pixel display period based on an input image signal, and
the above light source driving circuit changes an emission time period of the light source during the one pixel display period based on the input image signal, and changes an emission intensity of the light source during the one pixel display period based on the input image signal.

The above light source is a light source array in which a plurality of light source units are arranged.

The above light source array assigns one or more than one light source unit to one pixel of an LCD.

The above light source driving circuit changes the emission intensity of the light source to be one of values of 2^{N} (N=0, 1, 2, 3, ···) during the one pixel display period, and
the above optical device driving circuit selects the emission intensity being one of the values of 2^{N} (N=0, 1, 2, 3, ···) by turning on and off each of the optical switches during the one pixel display period.

According to one aspect of the present invention, an image display apparatus which displays an image based on an image signal comprises:
a light source array in which a plurality of light source units are arranged;
a light source driving circuit for inputting the image signal and controlling at least one of an emission intensity and an emission time period of each of the plurality of light source units in the light source array, based on an input image signal; and
an optical device in which optical switches for inputting beams output from the light source array and modulating the beams are arranged,
wherein at least one of the emission intensity and the emission time period of each of the plurality of light source units in the light source array is controlled to perform a gradation display at each pixel.

The above image signal includes a plurality of pixel signals, and the above light source driving circuit extracts a pixel signal corresponding to each of the plurality of light source units in the light source array out of the plurality of pixel signals and controls the emission intensity of each of the plurality of light source units in the light source array.

The above pixel signal includes a red signal, a green signal, and a blue signal,
the above light source array includes a red light source, a green light source, and a blue light source for each of the plurality of light source units, and
the above light source driving circuit controls the emission intensity of the red light source by using the red signal, the emission intensity of the green light source by using the green signal, and the emission intensity of the blue light source by using the blue signal.

Each of the above plurality of light source units corresponds to a pixel, and the above light source driving circuit controls the emission intensity of each of the plurality of light source units corresponding to each pixel.

The above light source driving circuit changes the emission intensity of each of the plurality of light source units during one pixel display period.

The above image display apparatus further comprises
an optical device in which optical switches for inputting beams output from the light source array and modulating the beams are arranged, and
an optical device driving circuit for inputting the image signal and controlling an operation time of each of the optical switches during one pixel display period based on the input image signal.

According to one aspect of the present invention, an image display apparatus which displays an image based on an image signal comprises:
a light source;
an optical device in which optical switches for inputting a beam output from the light source and modulating the beam are arranged; and
an optical device driving circuit for inputting the image signal and controlling an operation time of each of the optical switches by way of unequally dividing one pixel display period based on an input image signal.

The above optical device driving circuit inputs the image signal composed of N subfields (SF₁, SF₂, ···, SF_{N}) to which N (positive integer) number of unequal values (V₀, V₁, V₂, ···, V_{N-1}) are respectively assigned, divides the one pixel display period into (V₀+V₁+V₂ + ··· +V_{N-1}) periods, and turns on each of the optical switches during a period corresponding to values assigned to the subfields which has been turned on as the image signal.

The above values V₀, V₁, V₂, ···, V_{N-1} are equal to 2⁰, 2^{1,} ···, 2^{N-1}.

The above optical device is either an LCD (liquid crystal display) or a DMD (digital micromirror device).

The above light source includes at least one of a lamp, a laser diode, a light emitting diode, an electro luminescence, and a field emission display.

The above light source array includes at least one of a lamp, a laser diode, a light emitting diode, an electro luminescence, and a field emission display.

The above displaying the image is performed in color applying a color field sequential system in which displays of red, green, and blue are switched according as time passes.

The above color field sequential system is a system in which one frame display period is divided into three color field periods of a red field, a green field, and a blue field, and one pixel display period is included in each of the three color field periods.

The above color field sequential system is a system in which one frame display period is divided into a plurality of subfields, each of the plurality of subfields is further divided into three color field periods of a red field, a green field, and a blue field, and one pixel display period is included in one frame display period.

The above optical device is a liquid crystal display device, and the optical device driving circuit displays a gradation based on a digital gradation control system in which the liquid crystal display device is turned on and off by using one of a low temperature p-Si TFT AMD (polysilicon · thin film transistor · active matrix drive) and a PMD (passive matrix drive).

According to one aspect of the present invention, an image display apparatus which displays an image based on an image signal comprises:
a light source; and
a light source driving circuit for inputting the image signal and controlling an emission of the light source,
wherein the light source driving circuit sets a color temperature of white by controlling the emission of the light source.

The above light source includes a red light source, a green light source, and a blue light source, and
the above light source driving circuit sets the color temperature of white by adjusting an emission time ratio among the red light source, the green light source, and the blue light source.

The above light source driving circuit controls a gradation by changing at least one of an emission intensity and an emission time period of the light source, with keeping the emission time ratio among the red light source, the green light source, and the blue light source.

The above light source includes a red light source, a green light source, and a blue light source, and
the above light source driving circuit sets a color temperature of white by adjusting an emission intensity ratio among the red light source, the green light source, and the blue light source.

The above light source driving circuit controls a gradation by changing at least one of an emission intensity and an emission time period of the light source, with keeping the emission intensity ratio among the red light source, the green light source, and the blue light source.

According to one aspect of the present invention, an image display apparatus which displays an image based on an image signal comprises:
a light source array in which a plurality of light source units are arranged in a state that one or more than one of the plurality of light source units is located to be corresponding to one pixel; and
a light source driving circuit for inputting the image signal and controlling at least one of an emission intensity and an emission time period of each of the plurality of light source units in the light source array, based on a value of an input image signal,
wherein the image display apparatus performs a gradation display per pixel without using an optical device in which optical switches, for inputting beams and modulating the beams, are arranged.

According to one aspect of the present invention, an image display method of an image display apparatus, for displaying an image based on an image signal, which includes a light source and an optical device where optical switches for inputting a beam output from the light source and modulating the beam are arranged, the image display method comprises:
inputting the image signal and controlling an emission of the light source; and
inputting the image signal and controlling an operation time of each of the optical switches,
wherein the emission of the light source and the operation time of each of the optical switches in the optical device are combined to perform a gradation display at each pixel.

According to one aspect of the present invention, an image display method of an image display apparatus, for displaying an image based on an image signal, which includes a light source array where a plurality of light source units are arranged and an optical device where optical switches for inputting beams output from the light source array and modulating the beams are arranged, the image display method comprises:
inputting the image signal;
controlling an emission intensity of each of the plurality of light source units in the light source array based on an input image signal; and
performing a gradation display at each pixel by controlling the emission intensity of each of the plurality of light source units in the light source array.

According to one aspect of the present invention, an image display method of an image display apparatus, for displaying an image based on an image signal, which includes a light source and an optical device where optical switches, for inputting a beam output from the light source and modulating the beam, are arranged, the image display method comprises:
inputting the image signal, and
controlling an operation time of each of the optical switches by unequally dividing one pixel display period based on an input image signal.

According to one aspect of the present invention, an image display method of an image display apparatus, for displaying an image based on an image signal, which includes a light source and a light source driving circuit for inputting the image signal and controlling an emission of the light source, the image display method comprises:
setting a color temperature of white based on controlling the emission of the light source by using the light source driving circuit.

According to one aspect of the present invention, an image display method of an image display apparatus, for displaying an image based on an image signal, which includes a light source array where a plurality of light source units are arranged, the image display method comprises:
inputting the image signal;
controlling at least one of an emission intensity and an emission time of each of the plurality of light source units in the light source array based on a value of an input image signal; and
performing a gradation display at each pixel without using an optical device in which optical switches for inputting beams and modulating the beams are arranged.

### Brief Description of the Drawings

Fig. 1 shows a liquid crystal projector according to Embodiment 1;
Fig. 2 shows an LED array according to Embodiment 1;
Fig. 3 shows a color field sequential system in frame, according to Embodiment 1;
Fig. 4 shows one pixel signal according to Embodiment 1;
Fig. 5 shows a relation between the luminance and the emission time according to Embodiment 1;
Fig. 6 shows a relation between the luminance and the emission intensity according to Embodiment 1;
Fig. 7 shows a relation among the luminance, the emission time, and the emission intensity according to Embodiment 1;
Fig. 8 shows a relation between the subfield and the luminance according to Embodiment 1;
Fig. 9 shows gradation control based on the LCD according to Embodiment 1;
Fig. 10 shows gradation control based on the light source according to Embodiment 1;
Fig. 11 shows gradation control based on the LCD and the light source according to Embodiment 1;
Fig. 12 shows gradation control based on the LCD and the light source according to Embodiment 1;
Fig. 13 shows gradation control based on the LCD and the light source according to Embodiment 1;
Fig. 14 shows another liquid crystal projector according to Embodiment 1;
Fig. 15 shows another liquid crystal projector according to Embodiment 1;
Fig. 16 shows another liquid crystal projector according to Embodiment 1;
Fig. 17 shows another liquid crystal projector according to Embodiment 1;
Fig. 18 is a table showing control combinations according to Embodiment 1;
Fig. 19 shows a color field sequential system in subfield according to Embodiment 1;
Fig. 20 shows a direct view type display apparatus according to Embodiment 1;
Fig. 21 shows a white color temperature setting according to Embodiment 2;
Fig. 22 shows a white color temperature setting according to Embodiment 2; and
Fig. 23 shows a white color temperature setting according to Embodiment 2.

### Best Mode for Carrying out the Invention

### Embodiment 1.

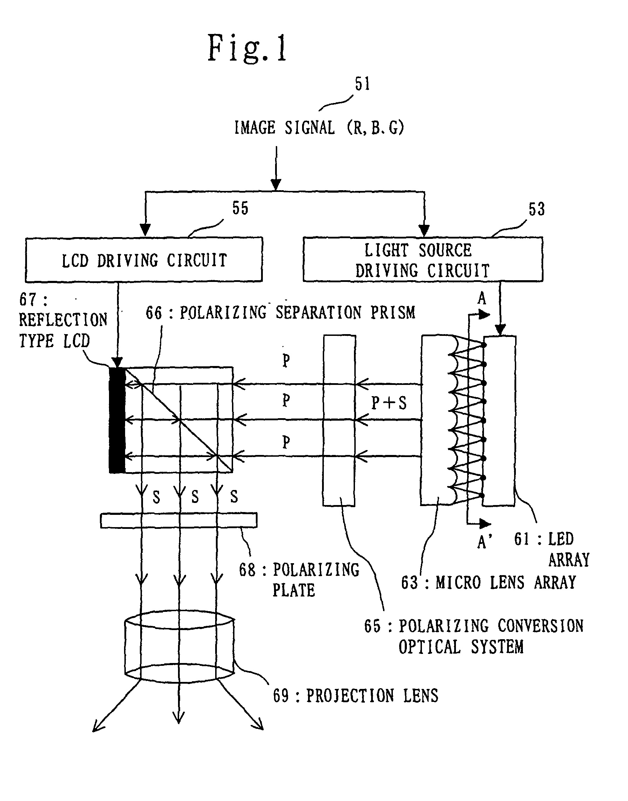

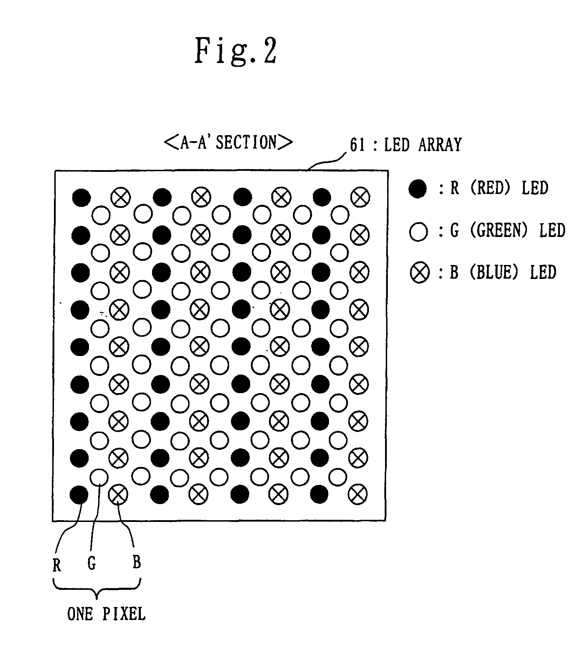

Fig. 1 shows a configuration of an image display apparatus of liquid crystal projector type according to the present Embodiment. In an LED (light emitting diode) array 61, LEDs are two-dimensionally arranged as a light source array. As shown in Fig. 2, LEDs in the LED array 61 are arranged like an array to be corresponding to a plurality of pixels. Three LEDs : an LED for red, an LED for green, and an LED for blue, are provided for one pixel. It is also acceptable that a plurality of LEDs for red, a plurality of LEDs for green, and a plurality of LEDs for blue are provided for one pixel. It is also acceptable that an LED for red, an LED for green, and an LED for blue are provided for a plurality of pixels. Each pixel corresponds to one of the pixels of the reflection type LCD (liquid crystal display) stated later. In order to make each pixel of the LCD correspond to each LED, it is enough to closely adhere the LCD to the light source array for example. It is also acceptable to use an optical system not shown in the figure in order to make each pixel of the LCD correspond to each LED.

A light emitting element, which is at least one, arranged in the light source array is hereinafter called a "light source unit". For example, an LED for red, which is at least one, can be called the light source unit. An LED for green, which is at least one, can be called the light source unit, or an LED for green, which is at least one, can be called the light source unit. It is also possible to regard the three LEDs for red, green, and blue as the light source unit. The light source array composing a line in width-wise or length-wise can also be regarded as the light source unit, or a rectangular area in the light source array, such as the rectangular area of 2 by 2, 4 by 4, or 2 by 4 can be regarded as the light source unit. In order to make the explanations below easy, it is supposed that "a light source unit" indicates three LEDs for red, green, and blue. As long as there is no special explanatory note, it is supposed that the light source indicates the conventional lamp light source and the light source array.

Beams output from the LED array 61 are input into a micro lens array 63, converted to parallel beams, and input into a polarizing conversion optical system 65. The polarizing conversion optical system 65 allows only a part of beams to pass through it. For instance, though P waves and S waves output from the LED are input into the polarizing conversion optical system 65, only the P waves are output from the polarizing conversion optical system 65 in the figure. These P waves are input into a polarizing separation prism 66, and the P waves from the polarizing separation prism 66 are projected onto a reflection type LCD 67 (one example of the optical device). In the reflection type LCD 67, an optical switch is provided for each pixel. The P wave input at each optical switch is modulated, and the modulated P wave is reflected as an S wave. The optical switches are arranged in a line of length-wise and a line of width-wise, and turned on or off based on a direction given to a pixel where the data line (length line) and the scan line (width line) cross each other. The S wave is reflected at the polarizing separation prism 66, passes a polarizing plate 68, and is projected on a screen through a projection lens 69. The polarizing plate 68 is provided for sharpening the contrast, and can be omitted.

It is also acceptable to provide a fry array lens (not shown) at the optical path in order to make the luminance distribution even. Besides, instead of making beams parallel by using the micro lens array 63, it is also acceptable to make beams from the adjacent lenses spread as radial beams, which are partly overlapped, in order to make the luminance distribution even. Also, in the case of a direct view type display apparatus, it is possible to use a diffusion plate for the purpose of making the luminance distribution even.

Each LED of each light source unit in the LED array 61 is driven by a light source driving circuit 53. The reflection type LCD 67 is driven by an LCD driving circuit 55 (one example of optical device driving circuit). An image signal (R, G, B) 51, such as a video signal and a television image signal, is input into the light source driving circuit 53 and the LCD driving circuit 55. In this paper, R indicates a red signal, G indicates a green signal, and B indicates a blue signal.

A ferroelectric liquid crystal or an anti-ferroelectric liquid crystal which can perform a high rate switching at less than 1 milli-second (some dozens of micro-seconds) can be used as the LCD. Besides, an OCB (Optically Compensated Bend) mode liquid crystal, which is a sort of general nematic liquid crystal, can also be used as the LCD.

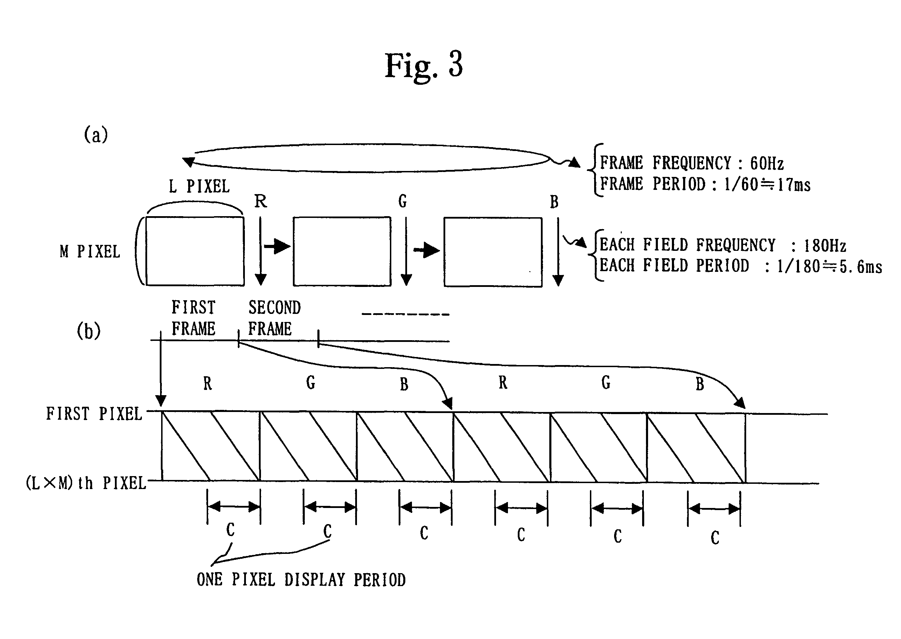

Fig. 3 illustrates an image display system according to the color field sequential system. In the color field sequential system, displaying is performed by switching displays of red, green, and blue at high rate as the time passes. Fig. 3 shows that the frame time period for displaying one frame is approximately 17ms in the case of sixty frames being displayed for one second. It is also shown in Fig. 3 that one frame is composed of a red field, a green field and a blue field, and a time period for displaying each field is approximately 5.6ms. Supposing that the number of pixels in one screen is L pixels × M pixels, it is necessary to display L × M pixels during the field period (5.6ms) which is the time period for displaying one field. The LCD driving circuit 55 displays each pixel of LCD, from the first pixel to the (L × M)th pixel in order. The time period keeping one pixel being turned on is about a half (5.6/2 = 2.8ms) of the field period (5.6ms). This period (2.8ms) for displaying one pixel is defined to be a "one pixel display period (C)". Namely, in the field sequential system, the "one pixel display period (C)" indicates a time period for displaying one color ( R, G, or B) of one pixel.

As stated above, Fig. 3 shows the case (called a "color field sequential system in frame" hereinafter) in which the time period for displaying one frame is divided into three color fields: a red field, a green field, and a blue field, and the period of each color field includes the time period for displaying one pixel. In the case of not using the field sequential system, such as an R, G, B three color simultaneous display or a monochrome (black and white, or monotone) display, the one pixel display period (C) indicates the time period for displaying one pixel.

The case of displaying 256 gradations of one color during the one pixel display period (C) of one color in the field sequential system will now be explained in the present Embodiment.

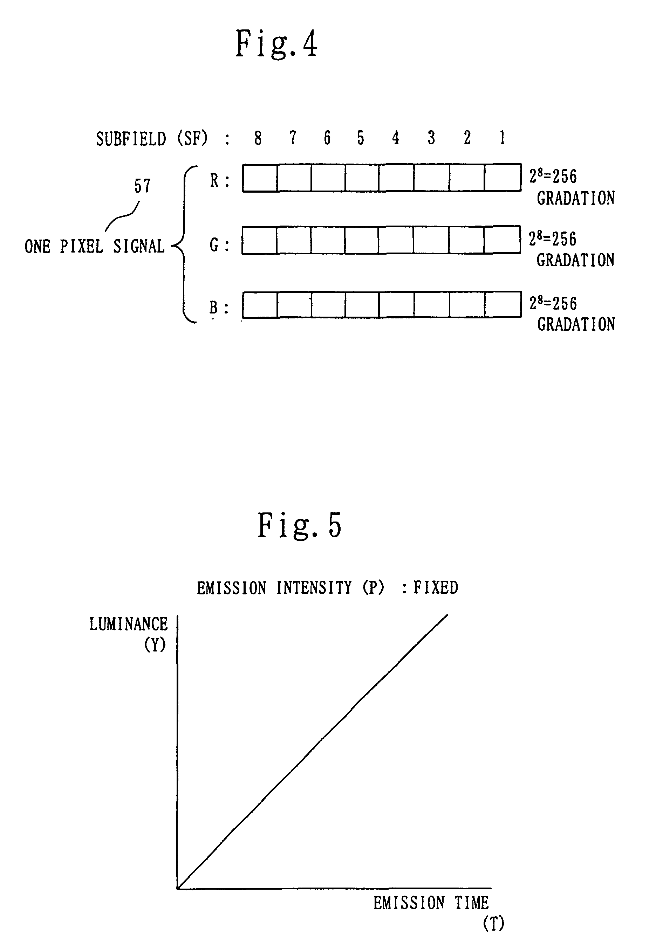

Fig. 4 shows a configuration of one pixel signal 57 included in the image signal (R, G, B) 51. The one pixel signal 57 is composed of three signals of red, green, and blue. The signal of each color is divided into eight fields: eight subfields (SF) 1 through 8 (from SF1 to SF8). Each field is a signal of one bit, for example. Therefore, each color is a signal of eight bits, and it is possible for the each color to express 256 gradations by using this eight bit signal. For instance, if all the subfields are 0, it is defined that the color is not to be displayed. If all the fields are 1, it is defined that the color is displayed at the maximum luminance. Since each of the three colors is able to display 256 gradations, 256 × 256 × 256 =16777216 gradational colors can be displayed. Namely, the so-called full color display can be performed.

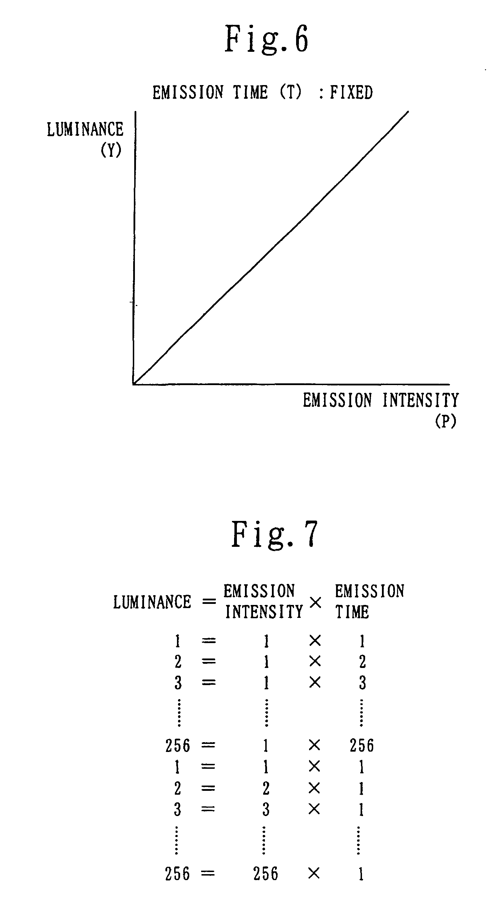

Fig. 5 illustrates a relation between the emission time and the luminance in the case of the emission intensity being fixed. As shown in the figure, it is supposed that the luminance is in proportion to the emission time in this Embodiment. Fig. 6 illustrates a relation between the emission intensity and the luminance in the case of the emission time being fixed. As shown in the figure, it is supposed that the luminance is in proportion to the emission intensity in this Embodiment. Fig. 7 shows the case in which the product of the emission intensity multiplied by the emission time is defined to be luminance. Since the luminance is the product of the emission intensity and the emission time in this Embodiment, the luminance becomes twice when the emission time is defined to be fixed and the emission intensity is defined to be twice. If the emission intensity is fixed, the luminance becomes twice when the emission time is twice.

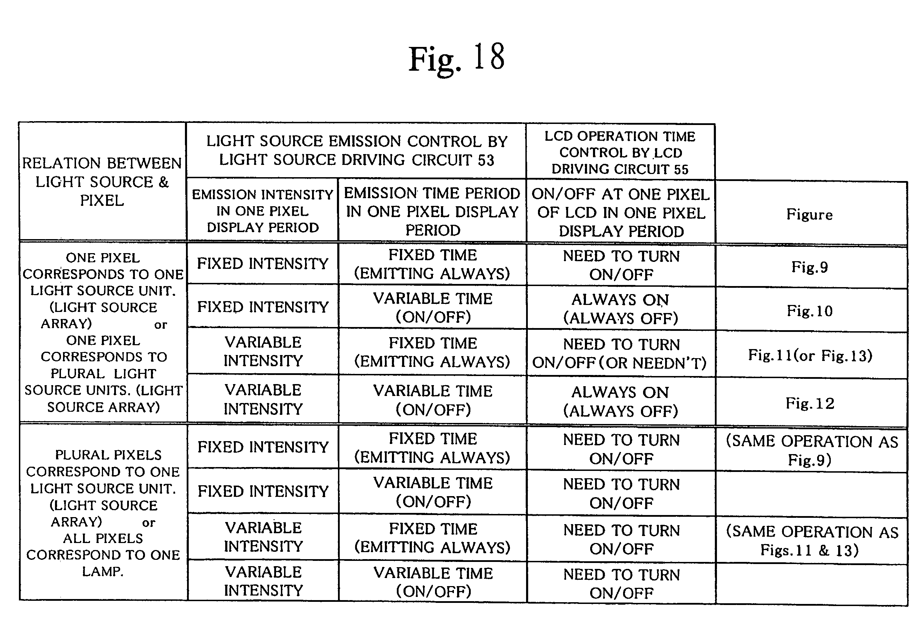

Fig. 18 illustrates a table showing combinations including some examples stated below. Fig. 18 illustrates the combinations of "relation between a light source and a pixel", "light source emission control by the light source driving circuit 53", and "LCD operation time control by the LCD driving circuit 55". In the "light source emission control by the light source driving circuit 53", there are the cases of the light source emission control with respect to "emission intensity in the one pixel display period" and with respect to "emission time period in the one pixel display period". In the first line through the fourth line of Fig. 18, it shows the case of "one pixel corresponds to one light source unit" or "one pixel corresponds to a plurality of light source units". In the fifth line through the eighth line of Fig. 18, it shows the case of "a plurality of pixels corresponds to one light source unit" or "all the pixels correspond to one lamp (or one light source)".

In the following description, it is preferable to refer to Fig. 18 when necessary because the instances stated below are shown in Fig. 18.

"Liquid crystal on-off gradation control system (lighting period control system) "is described in the present Embodiment. It is a feature of this system that digital gradation control is performed by on-off (PWM : Pulse Width Modulation) of the liquid crystal (LCD). Namely, the luminance is controlled by modulating a pulse width based only on the operation of on or off of the liquid crystal. In the conventional LCD, the gradation is controlled in analog by utilizing γ (gamma) feature (relational curve between a transmittance and an applied voltage). Though it is easy to control the gradation in the range where the relation between the transmittance and the applied voltage is expressed by a direct line (linear), the control performance is decreased and becomes unstable in the nonlinear range (where the transmittance is close to 1, or 0), which is a disadvantage of the analog control.

Regarding the digital gradation system, it is preferable to use either low temperature p-Si TFT AMD (polysilicon · thin film transistor · active matrix drive) or PMD (passive matrix drive) as the LCD-driving circuit 55. The combination of the low temperature p-Si TFT AMD and the on-off digital gradation control has the following advantages :

In the general (current) a-Si (amorphous silicon) TFT-LCD, a scan line driving circuit or a signal line driving circuit is located at the periphery (top or bottom side, or left side) of the panel. Therefore, not only the panel becomes large and heavy, but also a large number of contact points are needed between the panel and the external interface board.

On the other hand, comparing with the conventional art, it is possible to realize downsizing and achieving light weight because the part corresponding to the driving circuit can be included on a glass substrate in the low temperature p-Si TFT liquid crystal display (TFT―LCD). In addition, the number of contact points can be largely reduced.

The electron mobility of the p-Si TFT―LCD is one hundred times (or more than one hundred times) as much as that of the a-Si TFT―LCD, and is closing on the mobility of single crystal Si. The p-Si TFT―LCD, in which scanning can be performed at high-rate, is indispensable for displaying images on a large screen, such as a monitor of personal computer. The processing speed of the a-Si TFT―LCD is too slow.

In the current TFT liquid crystal display, the transistor used for a pixel switch has an only function of on-off, and analog data is supplied from the external driving circuit and stored in the capacitor provided per pixel.

If a TFT liquid crystal display of driving circuit unified type is formed by using the low temperature p-Si TFT obtained from a polycrystal based on the laser annealing, it is difficult to obtain an analog voltage output of high accuracy from the driving circuit, because the transistor feature (threshold voltage, electron mobility) is not uniform. Since an error is generated in the output voltage of each analog circuit, a luminance difference is generated between the length lines or between the display area blocks, which causes an irregular display (uneven luminance).

Besides, the current analog gradation control has a problem of uneveness of the γ curve (transmittance ― voltage feature) of each liquid crystal pixel or uneveness per manufacturing. Especially, there is a problem of the gradation control for an intermediate tone. Also, there is a problem that an adjusting operation is needed per manufacturing. Further, in the case of the low temperature p-Si TFT AMD, the stated problem that the feature of the TFT―LCD driving circuit unified type is not even is added to the above problems, which becomes a critical problem. In order to eliminate the above uneveness, it is necessary to strictly control the device features. To eliminate the above problems is a large target to be overcome in the manufacturing process, but it is impossible to perfectly solve these problems.

The on-off digital gradation control is very effective in solving or easing the above problems. It is just enough for the optical switch to have an only function of on (transmission) and off (cut off). For instance, even when the signal voltage is uneven or the γ feature of each pixel is uneven, it is adequate enough to supply the voltage to be applied for the range of on or off of the LCD. Namely, displaying which is difficult to influence by the device features can be performed.

Advantages of the color field sequential system (CFS) are as follows:
(1) No color filter (low loss, high luminance, and energy saving).
(2) Simple LCD cell configuration. The number of data drivers is one-third (low cost), and in other words, the resolution can be three times high.

Advantages of the digital gradation control are as follows :
(1) A gradation control circuit of high minuteness and high steadiness is unnecessary.
(2) Not getting such influence of the temperature change of the γ curve or the panel (manufacturing) uneveness generated in the analog gradation control. (adjustment per apparatus is not necessary).
(3) No color shading (no color uneveness).
(4) High contrast, and sharp outline picture and letter.
(5) Rare crosstalk.
(6) D/A (digital / analog ) converter is unnecessary.

Advantages of the low temperature p-Si TFTAMD are as follows :
(1) Large screen size can be realized.
(2) Driving circuit is embodied. (no external driver circuit).

As stated above, it is an advantage of the present Embodiment that the color field sequential system, the digital gradation control, and the low temperature p-Si TFT AMD are combined.

The "liquid crystal on off gradation control system (lighting period control system)" will now be explained. The gradation control based on only the LCD is the system in which luminance of 256 gradations can be obtained by combining the eight subfields from the SF1 (subfield 1) to the SF8 (subfield 8).

Luminance of 8 bits 256 gradations (2⁸=256) can be obtained by combining the eight subfields of SF1 (2⁰=1), SF2 (2¹=2), SF3 (2²=4), SF4 (2³=8), SF5 (2⁴=16), SF6 (2⁵=32), SF7 (2⁶=64) and SF8 (2⁷=128). For instance, luminance 0 indicates all the subfields from SF1 to SF8 are off. Luminance 3 is the sum of the SF1 and the SF2, luminance 5 is the sum of the SF1 and the SF3, and luminance 6 is obtained by adding the SF2 and the SF3. When the luminance is increased up to 255, it can be obtained by the total of the eight subfields, 1+2+4+8+16+32+64+128=255.

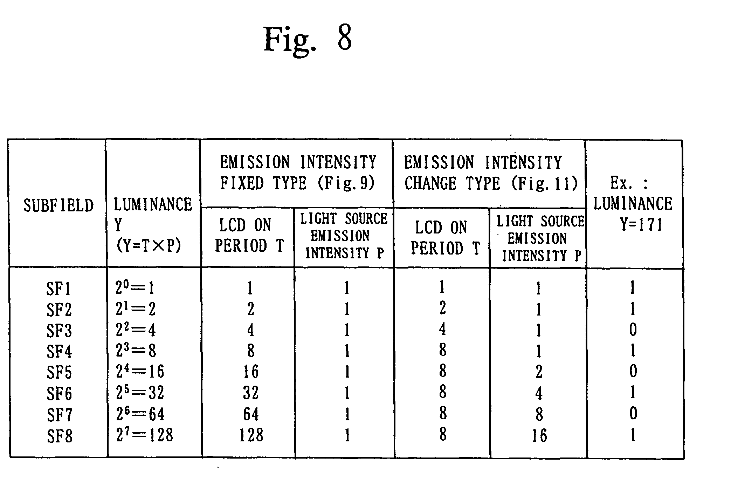

Fig. 8 shows the relation between the above stated subfield SF and the luminance Y. It is supposed that values of luminance are assigned to the subfields. Namely, Y=1 is assigned to the SF1, Y=2 is assigned to the SF2, and so on. By dint of the unequal values such as 2^{N} (N=0, 1, 2, ..., 7) being assigned to the eight subfields, it is possible to specify one of 256 gradations from 0 to 255 by way of turning each bit of the subfield on or off (1 or 0). As the unequal values, such as 2^{N} (N=0, 1, 2, ..., 7), are assigned to the eight subfields, any one of 256 gradations from 0 to 255 can be expressed. The "unequal values" indicates the case that all the values are different or the case that some same values are included. In the latter case, however, expressing any one of 256 gradations from 0 to 255 can not be achieved.

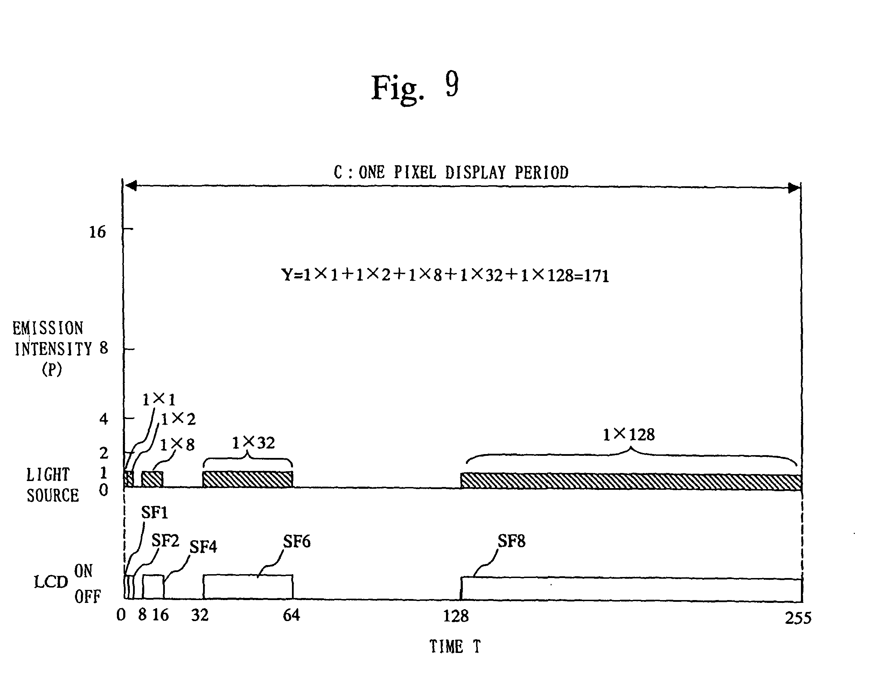

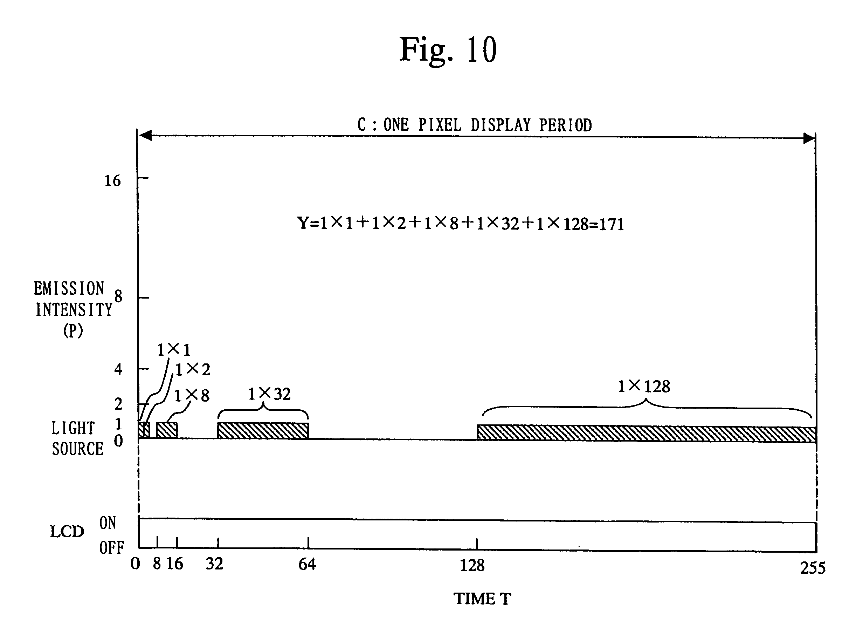

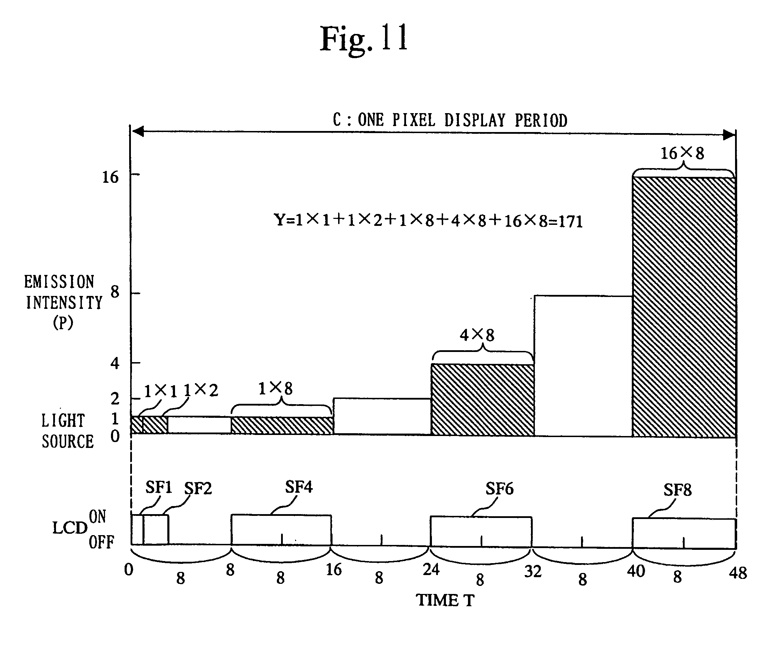

As shown in Fig. 7, the luminance can be calculated by multiplying the emission intensity by the emission time. Therefore, in order to realize the values of luminance Y in Fig. 8, it is necessary for the product of "LCD on period" and "light source emission intensity" to be the luminance. As one example, a type of the emission intensity being fixed is shown in Fig. 9 or Fig. 10. The type of changing the emission intensity is shown in Figs. 11, 12, or 13. In order to make the explanation simple in here, the case of realizing the value of luminance Y to be Y=171 (that is the case of the SF1, SF2, SF4, SF6 and SF8 being on) is explained with reference to Figs. 9 through 13. Fig. 9 shows the case that the emission intensity P of the light source (each LED of R, G, or B of the light source unit) is fixed during the one pixel display period (the first and the fifth lines in Fig. 18). In Fig. 9, the emission intensity P is defined to be P=1.

The quadrature axis indicates time, and a beam from the light source is utilized by way of turning on or off the LCD. In Fig. 9, the one pixel display period is equally divided into two hundred and fifty-five time periods. The LCD is driven only during the time periods corresponding to values assigned to the subfields. The SF1, SF2, SF4, SF6, and SF8 have become on in order to make the luminance Y=171. Namely, the LCD is turned on only during the time periods corresponding to each subfield of SF1, SF2, SF4, SF6, and SF8 as shown in Fig. 9. Thus, the image of luminance Y=171 can be displayed by utilizing the beams expressed in slanted lines in Fig. 9.

Instead of turning on or off the LCD, Fig. 10 shows the case the image of luminance Y =171 can be displayed by turning on or off only the light source (each LED of R, G, and B of the light source unit, in this example) with utilizing the beams expressed in slanted lines like the case of Fig. 9. (the second line of Fig. 18) In this case, when the color of the pixel is to be displayed, the light source is turned on or off during the one pixel display period, but the LCD can keep "on" (always "on") during the one pixel display period, or can be turned on or off as shown in Fig. 9. When the color of the pixel is not to be displayed (when all the subfields are off), the light source continues to be "off" during the one pixel display period. At this time, it is desirable for the LCD to continue to be "off' (always "off") in order to enhance the contrast. Regarding the direct view type image apparatus, it is acceptable not to include the LCD.

Next, the "liquid crystal on-off gradation control system (lighting period control system)" will now be explained with respect to the light source array. The way of performing a gradation control in digital based on the combination of the liquid crystal and the light source will be described. Comparing with performing a gradation control based on only the liquid crystal (LCD), it is possible for this way to process at higher speed. Thus, this way can be applicable to a high resolution screen. If it is tried to display the eight subfield screens by using only the LCD, the displaying takes time depending upon the response rate of the liquid crystal. Therefore, in the gradation control in digital based on the combination of the liquid crystal and the light source, a light source which can respond at high rate, such as LD, LED, or EL (electro luminescence) whose response rate is faster than that of liquid crystal, is modulated in order to perform the gradation control.

For instance, suppose that there is a system performed by the combination of the subfield conversion by using the liquid crystal based on the luminance being Y=1, 2, 4, 8, and another subfield conversion for the other four subfields based on the light source modulation. As twice eight is sixteen, four times eight is thirty-two, eight times eight is sixty-four, and sixteen times eight is one hundred and twenty-eight, it is defined that the intensity of the light source is the maximum when the luminance is 128. In the case of the luminance being 8, the intensity level of the light source is one-sixteenth of the maximum. According to this method of the combination of the four subfields of luminance 1, 2, 4, and 8 by using the LCD and the other four subfields of luminance 16, 32, 64, and 128 by using the light source, the respect of eight-bit modulation being performed is the same as the case of the gradation control by using only the liquid crystal, but it is possible for this method of the combination to control gradation within a shorter time than the gradation control by using only the liquid crystal.

The above stated relations are concretely explained as follows : [Y] below indicates the luminance Y.
Luminance : the Combination of the subfields from SF1 to SF4 ([1],[2],[4],[8])

The emission intensity of the light source is set to be once in the case of the luminance from 1 to 15.
0 : all off
1 :[1]
2 :[2]
3 :[1]+[2]
4 :[4]
5 :[1]+[4]
6 :[2]+[4]
7 :[1]+[2]+[4]
8 :[8]
9 :[1]+[8]
10 :[2]+[8]
11 :[1]+[2]+[8]
12 :[4]+[8]
13 :[1]+[4]+[8]
14 :[2]+[4]+[8]
15 :[1]+[2]+[4]+[8]
At [8] × 2 in the following, the emission intensity of the light source is set to be twice and the brightness is set to be twice as much as that of the subfield [8].
16 :[8] × 2
17 :[8] × 2+[1]
18 :[8] × 2+[2]
19 :[8] × 2+[1]+[2]
20 :[8] × 2+[4]
21 :[8] × 2+[1]+[4]
22 :[8] × 2+[2]+[4]
23 :[8] × 2+[1]+[2]+[4]
24 :[8] × 2+[8]
25 :[8] × 2+[1]+[8]
26 :[8] × 2+[2]+[8]
27 :[8] × 2+[1]+[2]+[8]
28 :[8] × 2+[4]+[8]
29 :[8] × 2+[1]+[4]+[8]
30 :[8] × 2+[2]+[4]+[8]
31 :[8] × 2+[1]+[2]+[4]+[8]
At [8] × 4 in the following, the emission intensity of the light source is set to be four times and the brightness is set to be four times as much as that of the subfield [8].
32 :[8] × 4
33 :[8] × 4+[1]
34 :[8] × 4+[2]
35 :[8] × 4+[1]+[2]
36 :[8] × 4+[4]
37 :[8] × 4+[1]+[4]
38 :[8] × 4+[2]+[4]
39 : and so forth
   .
   .
47 :[8] × 4+[1]+[2]+[4]+[8]
48 :[8] × 4+[8]×2
   .
   .
63 :[8] × 4+[8]×2+[1]+[2]+[4]+[8]
At [8] × 8 in the following, the emission intensity of the light source is set to be eight times and the brightness is set to be eight times as much as that of the subfield [8].
64 :[8] × 8
   .
   .
79 :[8] × 8+15([1]+[2]+[4]+[8])
80 :[8] × 8+16([8] × 2)
   .
   .
95 :80([8]×8+[8]×2)+15([1]+[2]+[4]+[8])
96 :64+32([8] × 8+[8] × 4)
   .
   .
111 :96+15(96([8] × 8+[8] × 4)+15([1]+[2]+[4]+[8]))
112 :96+16(96([8] × 8+[8] × 4)+16([8] × 2)
   .
   .
127 :112+15
At [8] × 16 in the following, the emission intensity of the light source is set to be sixteen times and the brightness is set to be sixteen times as much as the subfield [8].
128 :[8] × 16
   .
   .
255 : 128+127

The concrete example relating to the above will be described. Fig. 11 shows the case that the emission intensity of the light source (in this case, each LED of R, G, or B of the light source unit) is changed during the one pixel display period. (the third and seventh lines in Fig. 18) In Fig. 11, the one pixel display period is divided into six time periods. It is shown that the emission period of the light source of the first period and the second period are defined to be 1, the emission intensity of the third period is to be 2, the emission intensity of the fourth period is to be 4, the emission intensity of the fifth period is to be 8, and the emission intensity of the sixth period is to be 16. The length of the emission time of the four emission periods, from the SF4 to the SF8, are the same. Though the emission time is defined to be fixed, as the emission intensity of the light source has been increased, "the product of the emission intensity and the emission time" of the SF4 through the SF8 are the same as Fig. 9.
SF 1 indicates 1 × 1 = 1,
SF 2 indicates 1 × 2=2,
SF 4 indicates 1 × 8=8,
SF 6 indicates 4 × 8=32,
SF 8 indicates 16 × 8=128

Consequently, the image of luminance Y=171 can be displayed. As the one pixel display period is divided into six time periods in Fig. 11, it is possible for the case of Fig. 11 to make operation speeds of the LCD and the light source slower than the case of Fig. 9 where the period is divided into two hundred and fifty-five time periods. In another view point, the one pixel display period can be shortened and high speed processing can be achieved.

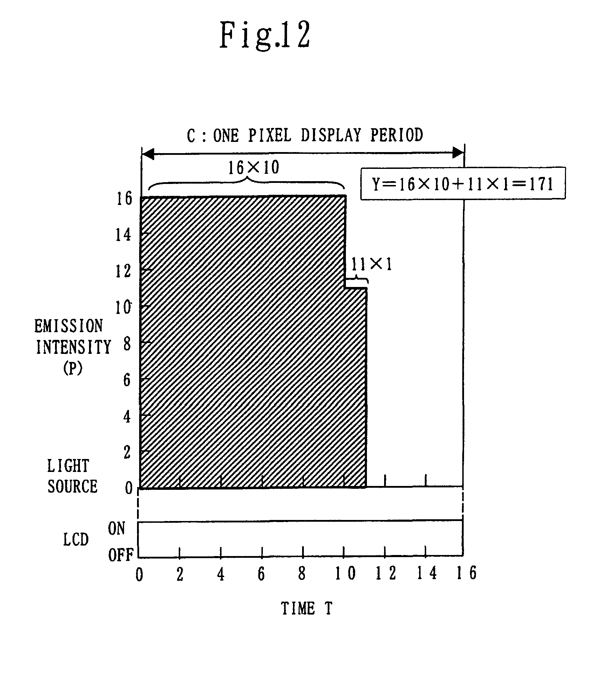

Fig. 12 shows the case in which a further faster process can be performed. The one pixel display period is equally divided into sixteen time periods and the emission intensity can be changed to one of sixteen levels. (the fourth line in Fig. 18)

One of 256 gradations can be displayed by using the sixteen emission time periods and the emission intensities of sixteen levels. Fig. 12 shows the case where displaying is performed by using the highest emission intensity (emission intensity P = 16) as many as possible. In order to make Y = 171, it is enough to emit the emission intensity P=16 at ten time periods and the emission intensity P = 11 at the last one time period. In Fig. 12 as well as Fig. 10, the LCD is always turned on during the one pixel display period for displaying the color. If it is not needed to display the color, the LCD is always off during the one pixel display period.

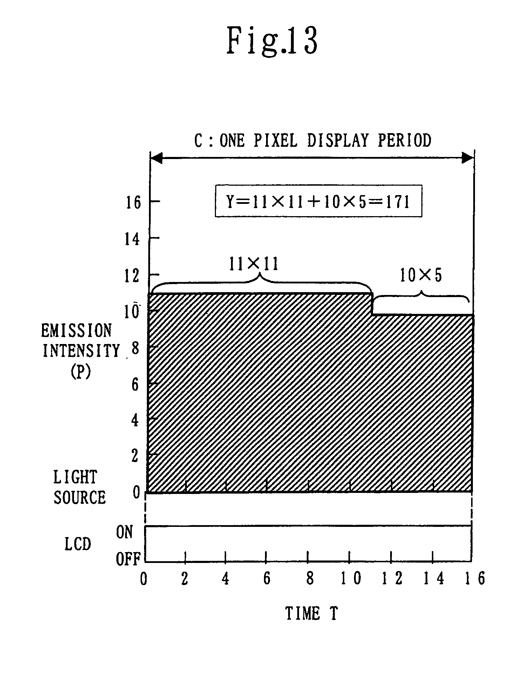

Fig. 13 also shows the case of 256 gradations being displayed by using the sixteen emission time periods and the emission intensities of sixteen levels. (the third and seventh lines in Fig. 18). The feature of Fig. 13 is that it is tried to keep the emission intensity at a fixed level as much as possible. The image of luminance Y=171 can be displayed by continuing the emission intensity P=11 at eleven time periods and the emission intensity P =10 at five time periods.

Since the case of the third line in Fig. 18 uses the light source array where one pixel corresponds to one or more than one light source unit, it is acceptable to change only "the emission intensity of the one pixel display period" per pixel and not to perform turning on or off at one pixel of the LCD in the one pixel display period. In this case, the LCD and the LCD driving circuit can be omitted. In the case of the seventh line in Fig. 18, it is necessary to perform turning on or off at one pixel of the LCD in the one pixel display period because "the emission intensity in the one pixel display period" can not be changed for each pixel.

As shown in the sixth line of Fig. 18, when "a plurality of pixels corresponds to one light source unit" or "all the pixels correspond to one lamp", it is acceptable that the "emission intensity during the one pixel display period" is made to be fixed, "the emission time period in the one pixel display period" is made to be variable, and "on or off is performed at one pixel of the LCD in the one pixel display period".

As shown in the eighth line of Fig. 18, when "a plurality of pixels corresponds to one light source unit" or "all the pixels correspond to one lamp", it is acceptable that the "emission intensity during the one pixel display period" is made to be variable, "the emission time period in the one pixel display period" is made to be variable, and "on or off is performed at one pixel of the LCD in the one pixel display period".

In the second and fourth lines of Fig. 18, the LCD is always on (or always off). Therefore, the LCD and the LCD driving circuit can be omitted. Namely, when each pixel gradation can be controlled by using the light source array in which one pixel corresponds to one or more than one light source unit and by changing either one or both of the "emission intensity in the one pixel display period" and "emission time period in the one pixel display period", the LCD and the LCD driving circuit can be omitted. This means that the gradation can be controlled only by directly modulating light emitting elements which compose a pixel.

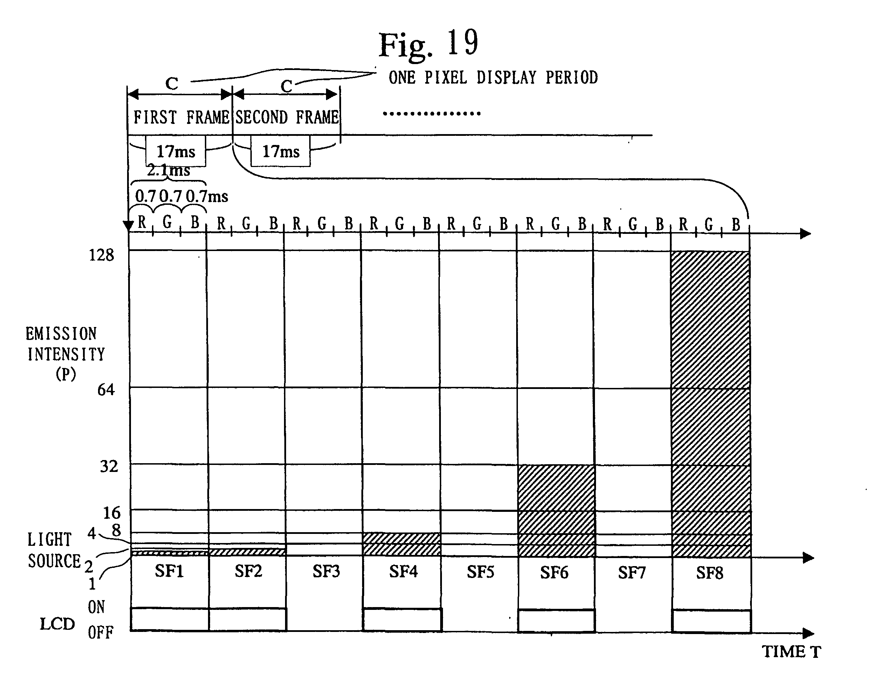

In Fig. 3 through Fig. 18, the color field sequential system has been explained in which a period for displaying one frame is divided into periods of three color fields : a red field, a green field and a blue field, and a period for displaying one pixel is included in each period of the three color fields (color field sequential system in frame). It is also acceptable for the color field sequential system as shown in Fig. 19 that the period for displaying one frame is divided into a plurality of subfields, each subfield is further divided into periods of three color fields of the red field, the green field, and the blue field, and the period for displaying one pixel is included in the period for displaying one frame (called a color field sequential system in subfield, hereinafter).

In the case of Fig. 19, one frame is divided into eight subfields (from SF1 to SF8) and each subfield is divided into three periods for displaying R, G, or B. In this case, the time period for displaying one frame (17 ms) is the period C for displaying one pixel.

Regarding the color field sequential system in subfield, it is also acceptable to have the same combinations as the color field sequential system in frame of Fig. 18. For instance, the case of Fig. 19 corresponds to Fig. 11 (the third line of Fig. 18). If R, G, and B are displayed in each subfield of Figs. 9, 10, and 11, this displaying can be the color field sequential system in subfield. If R, G, and B are displayed in each time period unit of the time T of Figs. 12 and 13, this case can be the color field sequential system in subfield.

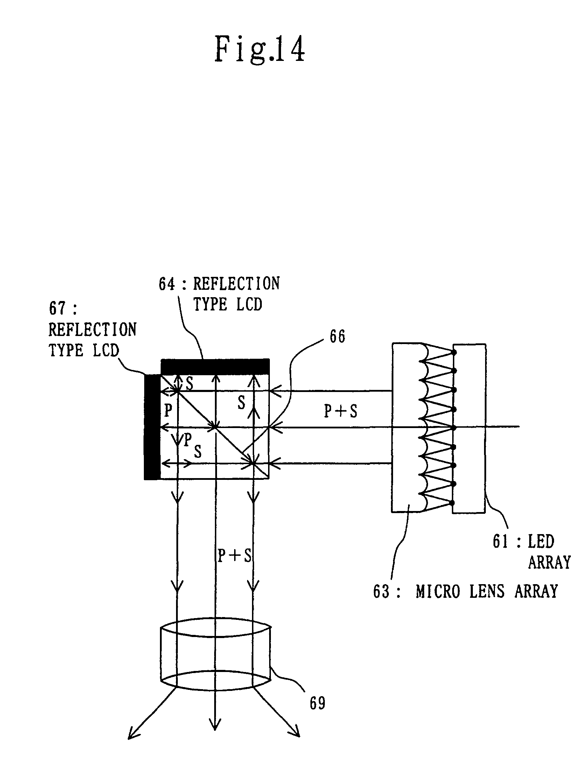

Now, other configuration examples of the image display apparatus will be explained. Fig. 14 shows a liquid crystal projector of field sequential system in which a two-dimensional LED array is used as a light source. In the configuration of Fig. 14, two LCDs: a reflection type LCD 64 and the reflection type LCD 67 are used. Therefore, the polarizing conversion optical system 65 shown in Fig. 1 can be unnecessary. In addition, as both the P wave and the S wave are used, a bright image can be realized.

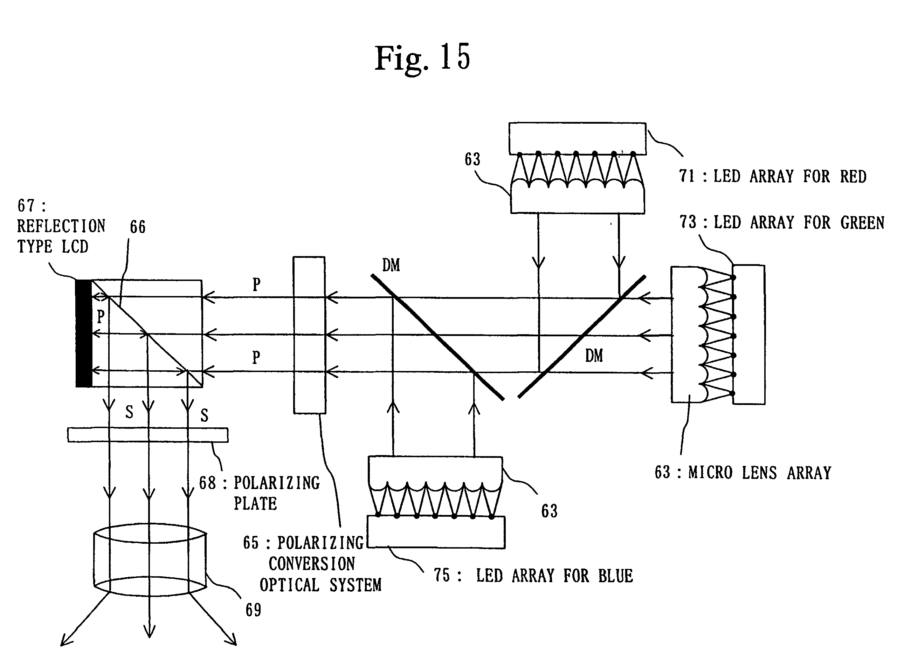

Fig. 15 shows another liquid crystal projector of field sequential system in which a two-dimensional LED array is used as a light source. In Fig. 15, the light source is composed of an LED array 71 for red, an LED array 73 for green, and an LED array 75 for blue. It is a feature of Fig. 15 that separate light sources for each of the three colors are located.

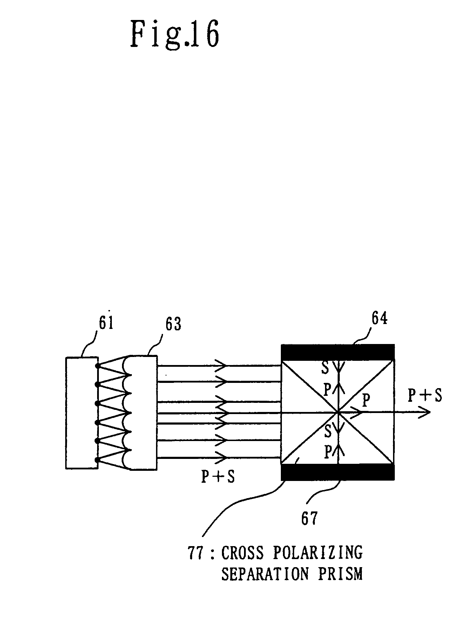

It is a feature of Fig. 16 that the reflection type LCD 64 and the reflection type LCD 67 are oppositely located on a cross polarizing separation prism 77. Since both the P wave and the S wave can be utilized, it is possible to realize a bright image.

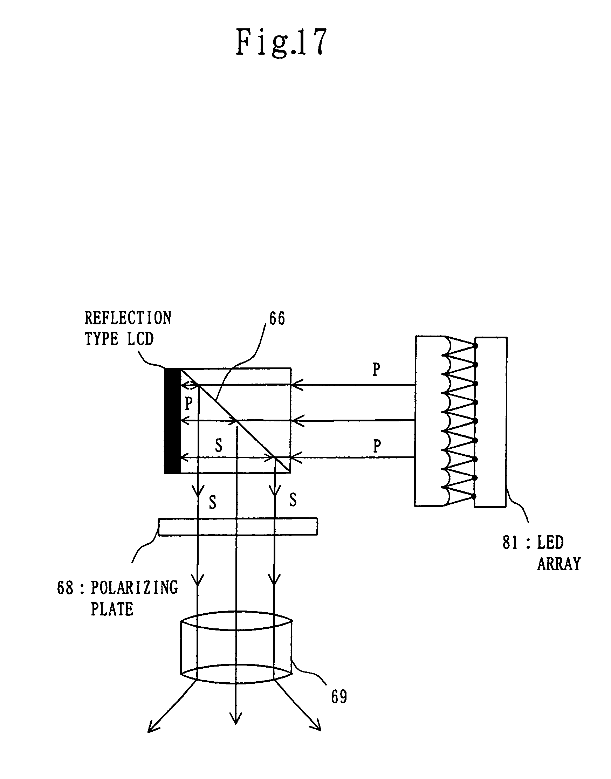

Fig. 17 shows the case where an LD array 81 is used in place of the LED array 61 of Fig. 1. As the LD array 81 outputs only the P wave for example, it is not necessary to provide the polarizing conversion optical system 65 shown in Fig. 1, which makes the configuration simple. In Fig. 17, it is also acceptable for the LD array 81 to be separated as three LED arrays for red, green and blue and to be respectively located as shown in Fig. 15. Either a stripe type LD or a surface emitting type LD can be the LD.

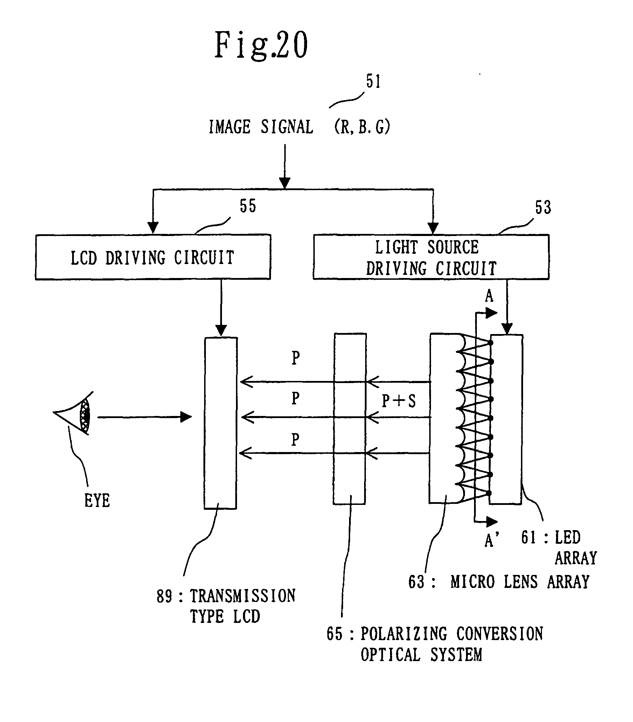

The case of using the reflection type LCD has been explained in the above examples. It is also acceptable to use a transmission type LCD 89 as shown in Fig. 20. The case of using the LCD of single plate type has been explained in the above examples. It is also acceptable to use LCD of three plate type for R, G, and B. Though the case of the liquid crystal projector has been explained in the above examples, other projection type display apparatus can be applied as the case, and a direct-view type image display apparatus as shown in Fig. 20 can also be the case.

The case of modulating beams from the light source by using the LCD has been explained in the above examples. It is also acceptable to modulate the beams by using a digital micro mirror device (DMD) (an example of the optical device). The DMD is a device in which a micro mirror (an example of the optical switch) is driven by SRAM. The DMD is turned on or off by changing the light reflection angle based on an angle of the mirror swaying.

The case of using the LED array or the LD array has been explained in the above examples. It is also acceptable to use an electro luminescence (EL) array, a micro lamp array, or a field emission display array as the light source array or the light source.

The case of one pixel of the LCD corresponding to a light source unit of the light source array as one-to-one has been explained in the above examples. It is also acceptable that one pixel corresponds to a plurality of light source units, or a plurality of pixels corresponds to one light source unit.

The case of applying the field sequential system has been explained in the above examples. It is also acceptable to use a display apparatus in which the field sequential system is not utilized.

The case of displaying color images has been explained in the above examples. It is also acceptable to use a black-and-white image display apparatus. The case of 256 gradation display has been explained in the above examples. The case of more than 256 gradation display or less than 256 gradation display can also be applicable.

The case of controlling an emission time has been explained in the above examples. It is also acceptable to adjust the "emission time" based on "the number of emission times" (the number of lighting times of on or off). Especially, in the high-rate light source, such as an EL, LED, LD, or FED, it is possible to adjust the "emission time" based on "the number of emission times" (the number of lighting times of on or off). Namely, the "emission time control" includes a control based on the number of times of emissions by pulses having fixed time width.

### Embodiment 2.

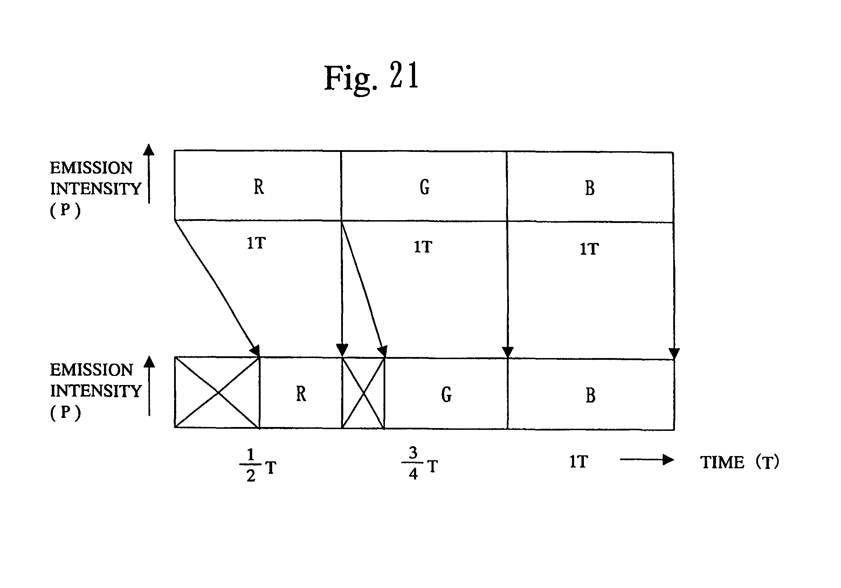

Respects differing from Embodiment 1 will be mainly explained below. Fig. 21 through Fig. 23 show the case of setting a color temperature of white based on controlling emission of the light source by using the light source driving circuit.

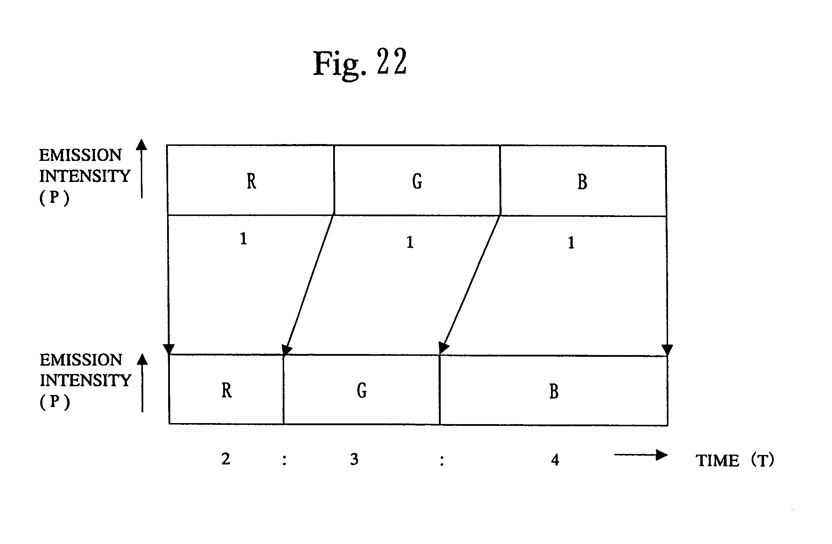

Figs. 21 and 22 show the case where the emission intensity of each of R, G, and B is defined to be fixed and a color temperature of white is set by changing the emission time period of each of R, G, and B. In Figs. 21 and 22, the ratio of emission time period of R, G, and B is changed from 1 : 1 : 1 to 2 : 3 : 4. The time period marked by a cross in Fig. 21 indicates that no light source is emitting or no emission of the light source is utilized.

Fig. 22 shows the case in which the emission time period for R, G, or B is given and taken among R, G, and B. After the color temperature of white is set once, the light source driving circuit controls the gradation by changing at least one of the emission intensity and the emission time period of the light source, with keeping the emission time period ratio (2 : 3 : 4). It is also acceptable to perform a digital gradation control by turning on or off the LCD.

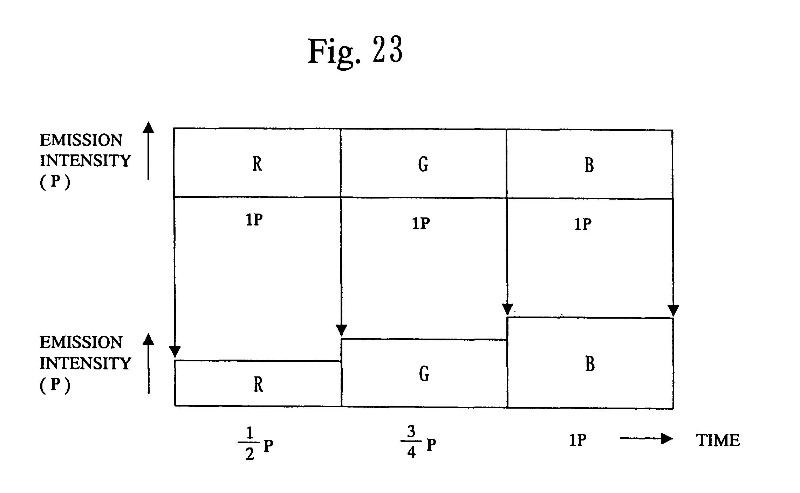

Fig. 23 shows the case where the color temperature of white is set by making the emission time period of each of R, G, and B fixed and changing the emission intensity of each of R, G, and B. In Fig. 23, the ratio of the emission intensity of R, G, and B is changed from 1 : 1 : 1 to 2 : 3 : 4. After the color temperature of white is set once, the light source driving circuit controls the gradation by changing at least one of the emission intensity and the emission time period of the light source, with keeping the emission intensity ratio (2 : 3 : 4). It is also acceptable to perform a digital gradation control by turning on or off the LCD.

It is also acceptable to set the color temperature of white by changing both the emission time period and the emission intensity, though not shown in the figures. The above white color temperature setting system can be applied to the color field sequential system in frame and the color field sequential system in subfield.

### Industrial Applicability

The present invention realizing the gradation display by controlling (on or off) the LCD in digital have the following effects:
1. In the conventional analog control utilizing the gamma curve, it is necessary to set various voltage indication values in order to obtain an intermediate tone, which makes the control circuit complicated. Further, high stability for voltage is needed in a non linear area where the transmittance of LCD is close to 0 or close to 1, which makes the driving control circuit complicated and expensive.
   On the other hand, according to the present invention, it is enough to give a direction of on or off to a pixel where the data line (vertical line) and the scan line (lateral line) cross each other, which makes the driving control circuit simple.
2. In the case of obtaining an intermediate tone (gradation) by the analog control based on the conventional method using a ferroelectricity liquid crystal or an anti-ferroelectricity liquid crystal, it is difficult to obtain an even intermediate display because of the maintenance voltage after data writing being decreased and so on. According to the present invention of the digital method, the above problem can be solved and stable intermediate tone can be obtained.

Further, the digital control combining the liquid crystal and the light source array has the following effects:
(1) In the conventional method using a lamp light source, a color shading (color uneveness over the whole screen), which is caused by a spectrum feature of the optical system and a lamp luminance distribution, is generated. This problem can be adjusted or corrected only by changing an optical element or a light source to the one having a better feature. According to the present invention, it is possible to more freely perform a color distribution adjustment by dint of the luminance adjustment of each pixel and the emission luminance adjustment of each light source. Therefore, a more dynamic and even color distribution can be realized.
(2) As it is possible to freely modulate (adjust) the intensity of the light source at high speed, an impulse-like emission which increases the peak luminance, such as the case of CRT, can be performed. Therefore, an image of higher contrast can be obtained.

Regarding the lamp light source, it is impossible to perform the gradation control of the combination before mentioned, because the response speed of the lamp light source is slow and the emission (spatial) luminance distribution is changed depending upon an input level of the lamp. LED or EL is a light source which can perform a high rate response of µs order, and LD is a light source which can perform a high rate response of ns order. By dint of having an array arrangement of such light source, the luminance distribution is not changed depending upon each input (power) level and the luminance distribution becomes even, which realizes the gradation control stated above. In the field sequential system, when the response time of an optical shutter is not fast enough, the gradation control backed up by the combination of the light source array can be specially effective.

Conventionally, the color temperature of white is decided based on bit by bit setting (by setting some bits ineffective). According to the Embodiments stated above, the color temperature of white is set by the emission control of the light source, which makes the gradation level be fully utilized and makes a display of high color expression faculty be realized.

## Claims

1. An image display apparatus which displays an image based on an image signal comprising:
a light source;
a light source driving circuit for inputting the image signal and controlling an emission of the light source;
an optical device in which optical switches, for inputting a beam output from the light source and modulating the beam, are arranged; and
an optical device driving circuit for inputting the image signal and controlling an operation time of each of the optical switches in the optical device,
wherein the emission of the light source and the operation time of each of the optical switches in the optical device are combined to perform a gradation display at each pixel.

2. The image display apparatus of claim 1, wherein the optical device driving circuit changes the operation time of each of the optical switches during one pixel display period based on an input image signal, and
the light source driving circuit sets an emission time period of the light source to be the one pixel display period and sets an emission intensity of the light source to be fixed during the one pixel display period.

3. The image display apparatus of claim 1, wherein the optical device driving circuit sets the operation time of each of the optical switches to be one pixel display period, and
the light source driving circuit sets an emission intensity of the light source to be fixed during the one pixel display period and changes an emission time period of the light source during the one pixel display period based on an input image signal.

4. The image display apparatus of claim 1, wherein the optical device driving circuit changes the operation time of each of the optical switches during one pixel display period based on an input image signal, and
the light source driving circuit sets an emission time period of the light source to be the one pixel display period and changes an emission intensity of the light source during the one pixel display period based on the input image signal.

5. The image display apparatus of claim 1, wherein the optical device driving circuit sets the operation time of each of the optical switches to be one pixel display period, and
the light source driving circuit changes an emission time period of the light source during the one pixel display period based on an input image signal and changes an emission intensity of the light source during the one pixel display period based on the input image signal.

6. The image display apparatus of claim 1, wherein the optical device driving circuit changes the operation time of each of the optical switches during one pixel display period based on an input image signal, and
the light source driving circuit sets an emission intensity of the light source to be fixed during the one pixel display period and changes an emission time period of the light source during the one pixel display period based on the input image signal.

7. The image display apparatus of claim 1, wherein the optical device driving circuit changes the operation time of each of the optical switches during one pixel display period based on an input image signal, and
the light source driving circuit changes an emission time period of the light source during the one pixel display period based on the input image signal, and changes an emission intensity of the light source during the one pixel display period based on the input image signal.

8. The image display apparatus of claim 1, wherein the light source is a light source array in which a plurality of light source units are arranged.

9. The image display apparatus of claim 8, wherein the light source array assigns one or more than one light source unit to one pixel of an LCD.

10. The image display apparatus of claim 4, wherein the light source driving circuit changes the emission intensity of the light source to be one of values of 2^{N} (N=0, 1, 2, 3, ···) during the one pixel display period, and
the optical device driving circuit selects the emission intensity being one of the values of 2^{N} (N=0, 1, 2, 3, ···) by turning on and off each of the optical switches during the one pixel display period.

11. An image display apparatus which displays an image based on an image signal comprising:
a light source array in which a plurality of light source units are arranged;
a light source driving circuit for inputting the image signal and controlling at least one of an emission intensity and an emission time period of each of the plurality of light source units in the light source array, based on an input image signal; and
an optical device in which optical switches for inputting beams output from the light source array and modulating the beams are arranged,
wherein at least one of the emission intensity and the emission time period of each of the plurality of light source units in the light source array is controlled to perform a gradation display at each pixel.

12. The image display apparatus of claim 11, wherein the image signal includes a plurality of pixel signals, and
the light source driving circuit extracts a pixel signal corresponding to each of the plurality of light source units in the light source array out of the plurality of pixel signals and controls the emission intensity of each of the plurality of light source units in the light source array.

13. The image display apparatus of claim 12, wherein the pixel signal includes a red signal, a green signal, and a blue signal, the light source array includes a red light source, a green light source, and a blue light source for each of the plurality of light source units, and
the light source driving circuit controls the emission intensity of the red light source by using the red signal, the emission intensity of the green light source by using the green signal, and the emission intensity of the blue light source by using the blue signal.

14. The image display apparatus of claim 11, wherein each of the plurality of light source units corresponds to a pixel, and
the light source driving circuit controls the emission intensity of each of the plurality of light source units corresponding to each pixel.

15. The image display apparatus of claim 14, wherein the light source driving circuit changes the emission intensity of each of the plurality of light source units during one pixel display period.

16. The image display apparatus of claim 11 further comprising,
an optical device in which optical switches for inputting beams output from the light source array and modulating the beams are arranged, and
an optical device driving circuit for inputting the image signal and controlling an operation time of each of the optical switches during one pixel display period based on the input image signal.

17. An image display apparatus which displays an image based on an image signal comprising:
a light source;
an optical device in which optical switches for inputting a beam output from the light source and modulating the beam are arranged; and
an optical device driving circuit for inputting the image signal and controlling an operation time of each of the optical switches by way of unequally dividing one pixel display period based on an input image signal.

18. The image display apparatus of claim 17, wherein the optical device driving circuit inputs the image signal composed of N subfields (SF_{1,} SF₂, ···, SF_{N}) to which N (positive integer) number of unequal values (V_{0,} V_{1,} V_{2,} ···, V_{N-1}) are respectively assigned, divides the one pixel display period into (V₀+V₁+V₂+···+V_{N-1}) periods, and turns on each of the optical switches during a period corresponding to values assigned to the subfields which has been turned on as the image signal.

19. The image display apparatus of claim 18, wherein the values V₀, V₁, V₂, ···, V_{N-1} are equal to 2⁰, 2^{1,} ···· , 2^{N-1}.

20. The image display apparatus of claim 19, wherein the optical device is one of an LCD (liquid crystal display) and a DMD (digital micromirror device).

21. The image display apparatus of claim 19, wherein the light source includes at least one of a lamp, a laser diode, a light emitting diode, an electro luminescence, and a field emission display.

22. The image display apparatus of claim 11, wherein the light source array includes at least one of a lamp, a laser diode, a light emitting diode, an electro luminescence, and a field emission display.

23. The image display apparatus of claim 1, wherein the displaying the image is performed in color applying a color field sequential system in which displays of red, green, and blue are switched according as time passes.

24. The image display apparatus of claim 23, wherein the color field sequential system is a system in which one frame display period is divided into three color field periods of a red field, a green field, and a blue field, and one pixel display period is included in each of the three color field periods.

25. The image display apparatus of claim 23, wherein the color field sequential system is a system in which one frame display period is divided into a plurality of subfields, each of the plurality of subfields is further divided into three color field periods of a red field, a green field, and a blue field, and one pixel display period is included in one frame display period.

26. The image display apparatus of claim 1, wherein the optical device is a liquid crystal display device, and the optical device driving circuit displays a gradation based on a digital gradation control system in which the liquid crystal display device is turned on and off by using one of a low temperature p-Si TFT AMD (polysilicon · thin film transistor · active matrix drive) and a PMD (passive matrix drive).

27. An image display apparatus which displays an image based on an image signal comprising:
a light source; and
a light source driving circuit for inputting the image signal and controlling an emission of the light source,
wherein the light source driving circuit sets a color temperature of white by controlling the emission of the light source.

28. The image display apparatus of claim 27, wherein the light source includes a red light source, a green light source, and a blue light source, and
the light source driving circuit sets the color temperature of white by adjusting an emission time ratio among the red light source, the green light source, and the blue light source.

29. The image display apparatus of claim 28, wherein the light source driving circuit controls a gradation by changing at least one of an emission intensity and an emission time period of the light source, with keeping the emission time ratio among the red light source, the green light source, and the blue light source.

30. The image display apparatus of claim 27, wherein the light source includes a red light source, a green light source, and a blue light source, and
the light source driving circuit sets a color temperature of white by adjusting an emission intensity ratio among the red light source, the green light source, and the blue light source.

31. The image display apparatus of claim 30, wherein the light source driving circuit controls a gradation by changing at least one of an emission intensity and an emission time period of the light source, with keeping the emission intensity ratio among the red light source, the green light source, and the blue light source.

32. An image display apparatus which displays an image based on an image signal comprising:
a light source array in which a plurality of light source units are arranged in a state that one or more than one of the plurality of light source units is located to be corresponding to one pixel; and
a light source driving circuit for inputting the image signal and controlling at least one of an emission intensity and an emission time period of each of the plurality of light source units in the light source array, based on a value of an input image signal,
wherein the image display apparatus performs a gradation display per pixel without using an optical device in which optical switches, for inputting beams and modulating the beams, are arranged.

33. An image display method of an image display apparatus, for displaying an image based on an image signal, which includes a light source and an optical device where optical switches for inputting a beam output from the light source and modulating the beam are arranged, the image display method comprising:
inputting the image signal and controlling an emission of the light source; and
inputting the image signal and controlling an operation time of each of the optical switches,
wherein the emission of the light source and the operation time of each of the optical switches in the optical device are combined to perform a gradation display at each pixel.

34. An image display method of an image display apparatus, for displaying an image based on an image signal, which includes a light source array where a plurality of light source units are arranged and an optical device where optical switches for inputting beams output from the light source array and modulating the beams are arranged, the image display method comprising:
inputting the image signal;
controlling an emission intensity of each of the plurality of light source units in the light source array based on an input image signal; and
performing a gradation display at each pixel by controlling the emission intensity of each of the plurality of light source units in the light source array.

35. An image display method of an image display apparatus, for displaying an image based on an image signal, which includes a light source and an optical device where optical switches, for inputting a beam output from the light source and modulating the beam, are arranged, the image display method comprising:
inputting the image signal, and
controlling an operation time of each of the optical switches by unequally dividing one pixel display period based on an input image signal.

36. An image display method of an image display apparatus, for displaying an image based on an image signal, which includes a light source and a light source driving circuit for inputting the image signal and controlling an emission of the light source, the image display method comprising:
setting a color temperature of white based on controlling the emission of the light source by using the light source driving circuit.

37. An image display method of an image display apparatus, for displaying an image based on an image signal, which includes a light source array where a plurality of light source units are arranged, the image display method comprising:
inputting the image signal;
controlling at least one of an emission intensity and an emission time of each of the plurality of light source units in the light source array based on a value of an input image signal; and
performing a gradation display at each pixel without using an optical device in which optical switches for inputting beams and modulating the beams are arranged.

38. The image display apparatus of claim 1, wherein the light source includes one or more than one light source corresponding to a plurality of pixels.

39. The image display apparatus of claim 32, wherein the light source array includes at least one of a lamp, a laser diode, a light emitting diode, an electro luminescence and a field emission display.
